(19) Europäisches Patentamt
European Patent Office
Office européen des brevets

(11) Veröffentlichungsnummer: **0 230 601 B1**

(12) **EUROPÄISCHE PATENTSCHRIFT**

(45) Veröffentlichungstag der Patentschrift: **11.11.92**

(51) Int. Cl.[5]: **C05G 3/00**, B01D 53/28, C08G 18/54

(21) Anmeldenummer: **86117434.0**

(22) Anmeldetag: **15.12.86**

# (54) Verfahren zum Erzeugen einer wasserdurchlässigen Umhüllung auf körnigen, wasserlöslichen Stoffen.

(30) Priorität: **16.12.85 DE 3544451**

(43) Veröffentlichungstag der Anmeldung:
**05.08.87 Patentblatt 87/32**

(45) Bekanntmachung des Hinweises auf die Patenterteilung:
**11.11.92 Patentblatt 92/46**

(84) Benannte Vertragsstaaten:
**AT BE CH DE ES FR GB IT LI LU NL SE**

(56) Entgegenhaltungen:
**EP-A- 0 107 811**
**EP-A- 0 140 380**
**AU-B- 528 086**
**DE-A- 1 945 108**
**DE-A- 2 030 664**
**DE-A- 2 349 200**
**GB-A- 2 017 126**
**GB-A- 2 099 723**
**US-A- 4 343 924**

(73) Patentinhaber: **Ashland-Südchemie-Kernfest GmbH**
**Reisholzstrasse 16**
**W-4010 Hilden(DE)**

(72) Erfinder: **Kögler, Hubert, Dr.**
**Am Ellersdahl 5**
**W-4020 Mettmann(DE)**
Erfinder: **Winter, Reinhard**
**Maikammerstrasse 14**
**W-5603 Wülfrath(DE)**
Erfinder: **Kuhlmann, Peter, Dr.**
**Zwingenbergerweg 46**
**W-5603 Wülfrath(DE)**

(74) Vertreter: **Vossius & Partner**
**Siebertstrasse 4 P.O. Box 86 07 67**
**W-8000 München 86(DE)**

EP 0 230 601 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die Erfindung betrifft ein Verfahren zur Erzeugung einer wasserdurchlässigen Umhüllung auf körnigen, wasserlöslichen Stoffen durch Beschichtung mit einer Beschichtungsmasse, die aus einem Polyisocyanat und einer Polyolkomponente besteht, und die mit einem Amin als Katalysator ausgehärtet wird. Durch diese Umhüllung wird eine langfristig gleichmäßige Abgabe des Stoffes aus dem beschichteten Granulat an die Umgebung erreicht.

Die Beschichtung von körnigen Stoffen, wie Mineraldünger, mit Kunststoffen zur Herabsetzung der Auflösungsgeschwindigkeit und damit zur Verlängerung ihrer Wirkungsdauer ist beispielsweise aus der NL-PS 129 279 und der DE-AS 21 55 924 bekannt. Gemäß NL-PS 129 279 wird dazu beispielsweise ein Leinöl-Dicyclopentadien-Copolymerisat verwendet. Zur Beschichtung sind erhöhte Temperaturen von über 50 ° C, beispielsweise 82 bis 121 ° C erforderlich. Die Beschichtungszeiten liegen zwischen 1 und 2 Stunden, was einen sehr hohen Energieaufwand und lange Kühlzeiten erfordert. Diese Verfahren sind somit relativ aufwendig und teuer. Umhüllte Mineraldünger haben deshalb bisher nur begrenzten Eingang in die Praxis gefunden, obwohl sie wesentliche Vorteile im Bezug auf die längerfristige, gleichmäßige Versorgung der Pflanzen mit Nährstoffen, sowie aus Umweltschutzaspekten aufweisen. Ähnliches gilt für andere mit wasserdurchlässigen Kunstharzumhüllungen versehene körnige, wasserlösliche Stoffe, wie Trocknungsmittel, z.B. Phosphorpentoxid oder Calciumchlorid.

In Au-A-528086 wird ein staubfreies, nicht agglomerietendes Pestizid- Düngemittel- Granulat beschrieben. Dieses Granulat wird dadurch hergestellt, daß Düngemittelgranulat mit einem wasserlöslichen Polyuretanfilm beschichtet wird, und, so lange der Film noch nicht ausgehärtet ist, mit einem staubfreien Pestizid versetzt wird.

Die zur Umhüllung nach den meisten bekannten Verfahren erforderlichen hohen Temperaturen stellen ferner eine große Schwierigkeit bei der Umhüllung von feuergefährlichen oder explosiven Stoffen, wie Ammoniumnitrat dar.

Der Erfindung liegt die Aufgabe zugrunde, ein Verfahren zur Erzeugung einer wasserdurchlässigen Umhüllung auf körnigen, wasserlöslichen Stoffen durch Beschichtung mit einem Kunstharz bereitzustellen, das bei Raumtemperatur ohne zusätzliche Erwärmung durchführbar ist. Dabei sollen Überzüge erhalten werden, die in beiden Richtungen wasserdurchlässig bzw. wasserdampfdurchlässig sind und die den Transport des aus dem körnigen Gut gelösten Stoffes nach außen ermöglichen. Der Überzug selbst darf dabei nicht rasch wasserlöslich sein, um eine zu rasche Abgabe des körnigen Stoffes an die Umgebung zu vermeiden. Der Überzug darf auch nicht zu spröde sein, sondern muß für Transport und Lagerung eine gewisse elastische Festigkeit aufweisen, da sonst Beschädigungen des Überzugs und spontane Freisetzung des körnigen Stoffes auftritt. Schließlich soll das Verfahren zu einer schnellen Umhüllung des körnigen Stoffes bei Raumtemperatur führen, wobei rasche Klebefreiheit der Umhüllng und Rieselfähigkeit des umhüllten Gutes erreicht werden muß.

Diese Aufgabe wird durch den überraschenden Befund gelöst, daß durch Umhüllung von körnigen wasserlöslichen Stoffen mit einer Beschichtungsmasse aus einem Polyisocyanat und einer bestimmten Polyolkomponente und Aushärtung der Beschichtungsmasse mit einem Amin als Katalysator eine wasserdurchlässige Umhüllung mit den vorstehend genannten hervorragenden Eigenschaften erhalten werden kann.

Gegenstand der Erfindung ist somit ein Verfahren zur Erzeugung einer wasserdurchlässigen Umhüllung auf körnigen, wasserlöslichen Stoffen durch Beschichtung mit einer Beschichtungsmasse, die ein Polyisocyanat und eine Polyolkomponente aus einem Kondensationsprodukt aus Phenolen und Aldehyden umfaßt und Aushärten der Beschichtungsmasse mit einem Amin als Katalysator das dadurch gekennzeichnet ist, daß man eine Polyolkomponente einsetzt, die zusätzlich einen Hydroxylgruppen enthaltenden Weichmacher und gegebenenfalls ein Hydroxylgruppen enthaltendes Verdünnungsmittel enthält.

Nach dem Verfahren der Erfindung lassen sich praktisch alle körnigen, wasserlöslichen Stoffe mit einer wasserdurchlässigen Umhüllung versehen. Somit läßt sich das Verfahren der Erfindung also zur Behandlung aller Stoffe anwenden, bei deren Verwendung eine gesteuerte Abgabe des Stoffes über einen längeren Zeitraum hinweg an die Umgebung gewünscht wird. Beispiele für derartige Stoffe sind wasserlösliche Düngergranulate. Ferner eignet sich das Verfahren der Erfindung auch zur Umhüllung hygroskopischen Stoffen, deren rasches Zerfließen in wasserdampfhaltiger Atmosphäre verhindert werden soll, z.B. von Trocknungsmitteln, wie Calciumchlorid und Phosphorpentoxid.

Die Korngröße der zu beschichtenden körnigen Stoffe ist nicht kritisch. Sie kann beispielsweise von 0,5 bis 10 mm reichen, wobei eine mittlere Korngröße im Bereich von 1 bis 5 mm bevorzugt ist.

Die Geschwindigkeit, mit der Wirkstoff aus dem nach dem Verfahren der Erfindung umhüllten körnigen Stoff abgegeben wird, läßt sich durch Variation der Polyol- und Isocyanatkomponenten, sowie durch die

Dicke der Umhüllung und ihren Gehalt an Polyurethan einstellen, so daß beispielsweise bei Düngergranulat eine Wirkungsdauer von 1 Monat bis 1 Jahr erreichbar ist.

Die Umhüllung läßt sich im Verfahren der Erfindung am einfachsten in einem rotierenden Gefäß, z. B. einer Trommel, die vorzugsweise mit einem Randabstreifer versehen ist, durchführen. Dabei wird auf den in der Trommel befindlichen körnigen Stoff stufenweise oder kontinuierlich die Beschichtungsmasse gegeben, die aus einer Polyisocyanatkomponente und einer Polyolkomponente besteht.

Als Polyisocyanatkomponente für die Herstellung der Polyurethan-Überzüge der Erfindung kommen aliphatische, cycloaliphatische, araliphatische, aromatische und heterocyclische Polyisocyanate in Betracht. Bevorzugte Polyisocyanate sind aromatische Polyisocyanate mit mindestens zwei Isocyanatgruppen im Molekül. Spezielle Beispiele für besonders geeignete aromatische Polyisocyanate sind Diphenylmethandiisocyanat (MDI) und Toluoldiisocyanat (TDI). Geeignet sind ferner Gemische von Polyisocyanaten und Polyisocyanat-Präpolymerisate.

Die Polyolkomponente der Beschichtungsmasse besteht aus einem Kondensationsprodukt aus Phenolen und Aldehyden und aus einem Hydroxylgruppen enthaltenden Weichmacher. Gegebenenfalls kann ein Hydroxylgruppen enthaltendes Verdünnungsmittel zugesetzt sein. Somit weisen alle Bestandteile der Polyolkomponente mit Isocyanatgruppen reaktive funktionelle Gruppen (Hydroxylgruppen) auf und nehmen an der Polyurethan-Reaktion teil. Dies ist ein wesentlicher Gesichtspunkt der Erfindung, da auf diese Weise keine chemisch nicht gebundenen organischen Bestandteile in der Umhüllung vorliegen, die im Verlauf der Auslaugung des körnigen, wasserlöslichen Stoffes aus der Umhüllung freigesetzt werden und zu Umweltproblemen führen können.

Die zahlreichen, vorstehend erläuterten wichtigen Eigenschaften der Umhüllung werden insbesondere durch gezielte Auswahl des Harzbestandteiles der Polyolkomponente erreicht. Als Harze können im Verfahren der Erfindung Kondensationsprodukte aus Phenolen und Aldehyden verwendet werden. Spezielle Beispiele dafür sind Benzylätherharze, Novolake und wasserlösliche Resole. Diese Harze enthalten mindestens 2, vorzugsweise 2 bis 8 Hydroxylgruppen im Molekül. Besonders bevorzugt sind Benzylätherharze, die aus Einheiten der Formel

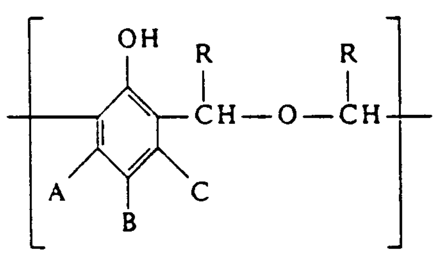

aufgebaut sind, wobei A,B und C gleich oder verschieden sind und jeweils ein Wasserstoff- oder Halogenatom, einen $C_{1-8}$-Kohlenwasserstoff- oder Oxykohlenwasserstoffrest und R ein Wasserstoffatom oder einen $C_{1-8}$-Kohlenwasserstoffrest bedeuten.

Das Kondensationsprodukt aus Phenolen und Aldehyden (Harzbestandteil) ist in der Polyolkomponente in einer Menge von 10 bis 90, vorzugsweise 20 bis 70 Gewichtsprozent enthalten. Bei einem Gehalt unter 10 Gewichtsprozent werden keine wasserdurchlässigen Überzüge mit ausreichender Festigkeit mehr erhalten, während bei einem Harzanteil über 90 Gewichtsprozent die Elastizität der Überzüge nicht mehr ausreicht.

Der zweite Bestandteil der Polyolkomponente ist ein Hydroxylgruppen enthaltender Weichmacher. Hierfür eignen sich die in der Polyurethanchemie zu diesem Zweck eingesetzten Stoffe, wobei insbesondere mit Rhizinusöl und Polyätherpolyolen hervorragend elastische Überzüge mit den gewünschten Eigenschaften erhalten werden.

Zur Einstellung der Viskosität der Beschichtungsmasse kann erforderlichenfalls der Polyolkomponente ein Hydroxylgruppen enthaltendes Verdünnungsmittel zugesetzt werden. Auch hierbei können die in der Polyurethanchemie üblicherweise für diesen Zweck verwendeten Stoffe eingesetzt werden, z.B. monofunktionelle Alkohole, wie Butanol oder Diacetonalkohol. Gegebenenfalls können auch die bereits bei den Weichmachern erwähnten Polyätherpolyole als Verdünnungsmittel benutzt werden.

Die verwendeten relativen Mengen von Weichmacher und Verdünnungsmittel sind nicht besonders kritisch. Die Mengen der beiden Stoffe ergeben zusammen mit den vorstehend erläuterten Harzbestandteilen die erfindungsgemäß eingesetzte Polyolkomponente.

Die Beschichtungsmasse wird nach dem Aufbringen auf den zu umhüllenden körnigen, wasserlöslichen

Stoff mit einem Amin als Katalysator ausgehärtet. Dabei kann das Amin entweder als gasförmiges Gemisch mit Luft oder Inertgas verwendet oder in flüssiger Form der Polyolkomponente zugemischt werden.

Bei Anwendung der Katalysator-Begasungstechnik werden vorzugsweise niedrig-siedende tertiäre Amine, wie Trimethylamin, Triäthylamin, Dimethyläthylamin oder Dimethylisopropylamin verwendet. Zur Herstellung des Katalysator-Gas-Gemisches kann man Luft oder ein Inertgas durch eine mit dem Amin gefüllte Gaswaschflasche leiten, wobei sich die Luft oder das Inertgas mit gasförmigem Amin anreichert oder sättigt. Die in dieser Ausführungsform günstigen Katalysatorkonzentrationen im Katalysator-Gas-Gemisch liegen zwischen 0,1 Vol.-% und der Sättigungskonzentration des eingesetzten Amins bei Raumtemperatur.

In einer anderen Ausführungsform der Erfindung kann der Amin-Katalysator auch in flüssiger Form der Polyolkomponente beigemischt werden. Hierzu eignet sich neben den vorstehend erwähnten tertiären Aminen auch höhersiedende Amine, wie Dimethyläthanolamin, Triäthanolamin oder Vinylimidazol.
Das flüssige Amin wird der Polyolkomponente in einer Menge von 0,1 bis 5,0 Vol.-% zugemischt.

Während der Beschichtung wird der körnige, wasserlösliche Stoff dauernd in Bewegung gehalten, um eine gleichmäßige Beschichtung zu gewährleisten. Nach dem Aufbringen der Beschichtungsmasse, die entweder den Katalysator einverleibt enthält, oder mit dem Katalysator begast wird, härtet das Beschichtungsharz in kürzester Zeit zu einem Polyurethanfilm auf dem körnigen, wasserlöslichen Stoff aus. Dabei kann in kurzer Zeit, d.h. in einer Zeit unter 15 Minuten, meist unter 5 Minuten, eine klebefreie Umhüllung und ein rieselförmiges beschichtetes Granulat erhalten werden. Da die Aushärtung bei Raumtemperatur verläuft, können auch gefährliche Stoffe, wie Ammoniumnitrat, problemlos umhüllt werden.

Üblicherweise wird die Beschichtungsmasse in einer Menge von etwa 3 bis 40 Gewichtsprozent, bezogen auf den zu umhüllenden, körnigen, wasserlöslichen Stoff eingesetzt. Von der Menge der Beschichtungsmasse und damit der Dicke der Umhüllung hängt im wesentlichen die Freisetzungsgeschwindigkeit des Stoffes aus den umhüllten Körnern ab.

Neben dem beschriebenen Verfahren lassen sich auch andere bekannte Beschichtungstechniken, wie Wirbelschicht-Beschichtung anwenden, bei denen Kontakt zwischen dem zu beschichtenden Granulat, der Beschichtungsmasse und dem gegebenenfalls erforderlichen Katalysator-Gas-Gemisch gewährleistet werden kann.

Die Komponenten der Beschichtungsmasse werden wie in der Polyurethanchemie üblich, im wesentlichen wasserfrei eingesetzt. Dies bedeutet, daß die Restwassermenge unter etwa 1 Gewichtsprozent liegen soll. Gegebenenfalls kann der Polyolkomponente ein Mittel zur Entfernung von Restfeuchtigkeit, wie es auf dem Polyurethangebiet bekannt ist, einverleibt werden.

Die Beschichtungsmasse kann nach Wunsch auch andere Modifizierungsmittel, Füllstoffe oder sonstige Bestandteile enthalten, die für den besonderen Anwendungszweck eines bestimmten, beschichteten Granulates günstig sind. Falls es sich bei dem körnigen, wasserlöslichen Stoff, der umhüllt wird, um ein Düngemittel handelt, können der Beschichtungsmasse z.B. für das Pflanzenwachstum wichtige Spurenelemente oder systemische Pflanzenschutzmittel zugesetzt werden. Falls der zu umhüllende körnige, wasserlösliche Stoff nicht in einem umweltempfindlichen Bereich eingesetzt wird, können der Beschichtungsmasse (z.B. der Polyolkomponente) auch weitere, nicht reaktive Bestandteile zugesetzt werden, beispielsweise aus der Polyurethanchemie bekannte Weichmacher, wie Dioctylphthalat oder Dibutylphthalat, oder Verdünnungsmittel, wie Ester, Ketone oder Kohlenwasserstoffe (aliphatische oder vorzugsweise aromatische).

Die Beispiele erläutern die Erfindung.

<u>Beispiel 1</u>

Als Basisdünger wird eine handelsüblicher NPK-Dünger der Zusammensetzung 15/15/15 mit einer durchschnittlichen Korngröße von 3 mm eingesetzt.

Die Polyolkomponente 1 hat folgende Zusammensetzung:

60 Teile eines Benzylätherharzes, hergestellt aus 1 Mol Phenol und 1,6 Mol Formaldehyde, mit einem Hydroxylgehalt von 16,5 % werden mit 36 Teilen Rhizinusöl und 18 Teilen Diacetonalkohol bei 50 °C homogen gemischt.

Als Isocyanatkomponente wird eine technisches Polyisocyanat auf Basis Diphenylmethandiisocyanat mit einem Isocyanatgehalt von 30 bis 32 % eingesetzt.
Als Beschichtungsaggregat dient eine mit etwa 60 Upm rotierende Schüssel, die mit einem Randabstreifer versehen ist, in der das Düngergranulat während der Beschichtung in Bewegung gehalten wird.
Als Katalysator-Gas-Gemisch wird bei 20 °C mit Triäthylamin gesättigter Stickstoff eingesetzt. Dieses Gemisch wird über einen Schlauch mit 50 l pro Stunde in die offene Schüssel eingeleitet.

500 g des Basisdüngers werden in der beschriebenen Apparatur vorgelegt.

37,5 g Polyolkomponente 1 und 37,5 g der Isocyanatkomponente werden vorgemischt und in etwa 3 gleiche Portionen geteilt.

In die rotierende Schüssel werden bei kontinuierlicher Begasung die 3 Portionen in Abständen von jeweils 1 Minute zugegeben. Nach der letzten Zugabe wird das Granulat unter Begasung noch 2 Minuten in Bewegung gehalten und dann aus der Apparatur entnommen. Die Beschichtung ist zu diesem Zeitpunkt bereits so weit ausgehärtet, daß der so umhüllte Dünger problemlos gelagert werden kann, ohne daß Verklumpung auftritt oder die Umhüllung beschädigt wird. Die endgültige Aushärtung ist nach 24 Stunden erreicht. Die Beschichtung umfaßt 15 Gew.-% Polyurethan, bezogen auf den Dünger.

Beispiel 2

Der Basisdünger und die Apparatur entsprechen Beispiel 1.

Die Polyolkomponente 2 hat folgende Zusammensetzung:

30 Teile Benzylätherharz, hergestellt aus 1 Mol Phenol und 1.2 Mol Formaldehyd, mit einem Hydroxylgehalt von 16,9%, werden mit 60 Teilen Rizinusöl und 10 Teilen Diacetonalkohol bei 50 °C homogen gemischt.

Als Katalysator-Gas-Gemisch wird bei 20 °C mit Dimethyläthylamin gesättigter Stickstoff eingesetzt.

5oo g Basisdünger wird wie in Beispiel 1 vorgelegt.

37,5 g Polyolkomponente 2 und 37,5 g Isocyanatkomponente aus Beispiel 1 werden vorgemischt. Der Basisdünger wird wie in Beispiel 1 beschichtet (15 Gew.-% Polyurethan, bezogen auf den Dünger).

Beispiel 3

Beispiel 2 wird mit 31,25 g Polyolkomponente 2 und 31,25 g Isocyanatkomponente wiederholt (12,5 Gew.-% Polyurethan bezogen auf den Dünger).

Beispiel 4

Beispiel 2 wird mit 43,75 g Polyolkomponente 2 und 43,75 g Isocyanatkomponente wiederholt (17,5 Gew.-% Polyurethan bezogen auf den Dünger).

Beispiel 5

Beispiel 2 wird wiederholt, jedoch werden 100 Teilen der Polyolkomponente 10 Teile eines Molekularsiebes auf Basis Zeolith beigemischt (Polyolkomponente 3). Es werden 37,5 g Polyolkomponente 3 und 37,5 g Isocyanatkomponente eingesetzt (15 Gew.-% Polyurethan, bezogen auf den Dünger).

Bestimmung der Wirkstoffabgabe:

Zur Bestimmung der Dauer der Wirkstoffabgabe werden jeweils 12,5 g des nach den Beispielen 1 bis 5 hergestellten beschichteten Düngers in 250 g Wasser gegeben und bei 22 °C gelagert. Die in Lösung gegangene Wirkstoffmenge wird durch Messung der elektrischen Leitfähigkeit bestimmt. Über den Vergleich mit nicht beschichteten Basisdüngern läßt sich die in Lösung gegangene Wirkstoffmenge zurückrechnen.

Als Vergleichs-Beispiel 6 wird ein handelsüblicher beschichteter Langzeitdünger (NPK 14/14/14) mit einer angegebenen Wirkungsdauer von 3 bis 4 Monaten bei üblichen Bodenverhältnissen mitbestimmt.

In Lösung gegangene Wirkstoffmenge in %

| Zeit \ Beispiel | 1 | 2 | 3 | 4 | 5 | Vergleich 6 |
|---|---|---|---|---|---|---|
| 1 Tag | 4,2 | 15,o | 18,9 | 5,7 | 4,7 | 14,3 |
| 2 Tage | 14,3 | 27,6 | 32,7 | 13,o | 1o,8 | 24,1 |
| 1 Woche | 21,2 | 61,5 | 62,o | 48,o | 26,5 | 39,7 |
| 2 Wochen | 3o,o | 72,2 | 75,7 | 7o,o | 45,2 | 51,2 |
| 3 Wochen | 31,5 | 75,5 | 8o,o | 71,2 | 51,5 | 53,o |
| 4 Wochen | 37,5 | 79,o | 81,5 | 76,o | 61,5 | 59,o |
| 5 Wochen | 4o,o | 8o,2 | 82,5 | 78,o | 66,7 | 62,o |

Umhüllung von Trockenmitteln

Beispiel 7:

Als Trockenmittel wird ein Granulat aus Phosphorpentoxid mit einer durchschnittlichen Korngröße von 4 mm eingesetzt.

500 g des Phosphorpentoxid werden wie in Beispiel 1 beschrieben vorgelegt und mit 17,5 g der Polyolkomponente 1 und 17,5 g der Isocyanatkomponente wie in Beispiel 1 beschrieben beschichtet. (7 Gew.-% Polyurethan bezogen auf Phosphorpentoxid).

Als Katalysator-Gasgemisch wird bei 20° C mit Dimethyläthylamin gesättigter Stickstoff eingesetzt.

Beispiel 8:

Es werden das in Beispiel 7 beschriebene Phosphorpentoxid und das in Beispiel 1 beschriebene Beschichtungsaggregat eingesetzt. Es wird eine Polyolkomponente 4 mit folgender Zusammensetzung verwendet:

60 Teile eines Benzylätherharzes, hergestellt aus einem Mol Phenol und 1,4 Mol Formaldehyd mit einem Hydroxylgehalt von 16,7 % werden mit 5 Teilen Rizinusöl, 5 Teilen Dioctylphthalat, 10 Teilen eines aromatischen Kohlenwasserstoff-Gemisches des Siedebereichs 160 - 180° C und 20 % Diacetonalkohol bei 50° C homogen gemischt. Dieser Mischung werden anschließend bei Raumtemperatur 2 Teile Dimethyläthanolamin zugemischt.

24 g dieser Polyolkomponente 4 und 23,5 g der Isocyanatkomponente werden je in 2 gleiche Portionen aufgeteilt.

500 g Phosphorpentoxid werden in dem Beschichtungsaggregat vorgelegt und zunächst die 1. Portion der Polyolkomponente zugegeben.

Nach ca. 1 Minute wird dann die 1. Portion Isocyanatkomponente addiert. Nach einer Dauer von 5-6 Minuten wird dann die 2. Portion Polyolkomponente zugegeben und nach einer weiteren Minute die 2. Portion Isocyanatkomponente. Das Granulat wird noch 10 Minuten in Bewegung gehalten und ist dann klebfrei ausgehärtet. (9,5 Gew.-% Polyurethan bezogen auf Phosphorpentoxid).

## Patentansprüche

**1.** Verfahren zur Erzeugung einer wasserdurchlässigen Umhüllung auf körnigen, wasserlöslichen Stoffen durch Beschichtung mit einer Beschichtungsmasse, die ein Polyisocyanat und eine Polyolkomponente aus einem Kondensationsprodukt aus Phenolen und Aldehyden umfaßt, und Aushärten der Beschichtungsmasse mit einem Amin als Katalysator,
**dadurch gekennzeichnet,** daß man eine Polyolkomponente einsetzt, die zusätzlich einen Hydroxylgruppen enthaltenden Weichmacher und gegebenenfalls ein Hydroxylgruppen enthaltendes Verdünnungsmittel enthält.

**2.** Verfahren nach Anspruch 1, dadurch gekennzeichnet, daß man den Katalysator als gasförmiges Gemisch aus einem Amin mit Luft oder Inertgas verwendet.

**3.** Verfahren nach Anspruch 1, dadurch gekennzeichnet, daß man den Katalysator in flüssiger Form der Polyolkomponente zumischt.

**4.** Verfahren nach Anspruch 1, dadurch gekennzeichnet, daß man als Polyisocyanat aromatische Polyisocyanate einsetzt.

**5.** Verfahren nach Anspruch 1, dadurch gekennzeichnet, daß man eine Polyolkomponente einsetzt, die 10 bis 90, vorzugsweise 20 bis 70 Gewichtsprozent Kondensationsprodukt aus Phenolen und Aldehyden umfaßt.

**6.** Verfahren nach Anspruch 1, dadurch gekennzeichnet, daß man als Kondensationsprodukt aus Phenolen und Aldehyden Benzylätherharze, Novolake oder wasserfreie Resole einsetzt.

**7.** Verfahren nach Anspruch 1, dadurch gekennzeichnet, daß man als Hydroxylgruppen enthaltenden Weichmacher Rhizinusöl oder ein Polyätherpolyol einsetzt.

**8.** Verfahren nach Anspruch 1, dadurch gekennzeichnet, daß man als Hydroxylgruppen enthaltendes Verdünnungsmittel Diacetonalkohol, Butanol oder ein Polyätherpolyol einsetzt.

**9.** Verfahren nach Anspruch 1, dadurch gekennzeichnet, daß man eine Polyolkomponente verwendet, die ein Mittel zur Entfernung von Restfeuchtigkeit enthält.

**10.** Anwendung des Verfahrens nach den Ansprüchen 1 bis 9 zur Umhüllung von wasserlöslichen Düngergranulaten mit einer durchschnittlichen Korngröße von 0,5 bis 10, vorzugsweise 1 bis 5 mm.

**11.** Ausführungsform nach Anspruch 10, dadurch gekennzeichnet, daß man der Beschichtungsmasse für das Pflanzenwachstum wichtige Spurenelemente oder systemische Pflanzenschutzmittel zusetzt.

**12.** Anwendung des Verfahrens nach den Ansprüchen 1 bis 9 zur Umhüllung von wasserlöslichen Trocknungsmitteln.

## Claims

1. A method for producing a water-permeable skin on water-soluble particulate materials by coating with a coating substance comprising a polyisocyanate and a polyol component from a condensation product of phenols and aldehydes, and hardening of the coating substance with an amine as catalyst, characterised in that a polyol component is used which also comprises a plasticizer containing hydroxyl groups and optionally a thinner containing hydroxyl groups.

2. A method according to claim 1, characterised in that the catalyst is used as a gaseous mixture of an amine with air or inert gas.

3. A method according to claim 1, characterised in that the catalyst is mixed in fluid form with the polyol component.

4. A method according to claim 1, characterised in that aromatic polyisocyanates are used as the polyisocyanate.

5. A method according to claim 1, characterised in that a polyol component is used which contains 10 to 90%, preferably 20 to 70% by weight condensation product from phenols and aldehydes.

6. A method according to claim 1, characterised in that benzyl ether resins, novolaks or water-free resols are used as the condensation product from phenols and aldehydes.

7. A method according to claim 1, characterised in that rhizinus oil or a polyetherpolyol is used as the plasticizer containing hydroxyl groups.

8. A method according to claim 1, characterised in that diacetonalcohol, butanol or a polyetherpolyol is used as the thinner containing hydroxyl groups.

9. A method according to claim 1, characterised in that a polyol component is used which contains an agent for removing residual moisture.

10. Application of the method according to claim 1 to 9 for coating water-soluble fertiliser granules having a mean particle size of 0.5 to 10, preferably 1 to 5 mm.

11. Embodiment according to claim 10, characterised in that trace elements important for plant growth or systemic plant protecting agent is added to the coating substance.

12. Application of the method according to claims 1 to 9 for coating water-soluble drying agents.

## Revendications

1. Procédé pour former une enveloppe perméable à l'eau sur des matières granuleuses solubles dans l'eau par revêtement à l'aide d'une masse comprenant un polyisocyanate et un composant polyol consistant lui-même en un produit de condensation de phénol et d'aldéhyde et durcissement de la masse de revêtement à l'aide d'un catalyseur consistant en une amine,
caractérisé en ce que l'on utilise un composant polyol qui contient en outre un plastifiant portant des groupes hydroxy et le cas échéant un diluant portant des groupes hydroxy.

2. Procédé selon la revendication 1, caractérisé en ce que l'on utilise le catalyseur à l'état de mélange gazeux d'une amine avec de l'air ou un gaz inerte.

3. Procédé selon la revendication 1, caractérisé en ce que l'on mélange le catalyseur à l'état liquide avec le composant polyol.

4. Procédé selon la revendication 1, caractérisé en ce que l'on utilise en tant que polyisocyanates des polyisocyanates aromatiques.

5. Procédé selon la revendication 1, caractérisé en ce que l'on utilise un composant polyol comprenant de 10 à 90, de préférence de 20 à 70 % en poids d'un produit de condensation de phénol et d'aldéhyde.

6. Procédé selon la revendication 1, caractérisé en ce que l'on utilise en tant que produits de condensation de phénol et d'aldéhyde des résines d'éthers benzyliques, des novolaques ou des résoles anhydres.

7. Procédé selon la revendication 1, caractérisé en ce que l'on utilise en tant que plastifiant portant des groupes hydroxy de l'huile de ricin ou un polyétherpolyol.

8. Procédé selon la revendication 1, caractérisé en ce que l'on utilise en tant que diluant portant des groupes hydroxy le diacétone-alcool, le butanol ou un polyéther-polyol.

9. Procédé selon la revendication 1, caractérisé en ce que l'on utilise un composant polyol contenant un produit servant à éliminer l'humidité résiduelle.

10. Application du procédé selon les revendications 1 à 9, à l'enrobage de granulés d'engrais solubles dans l'eau à une dimension de grain moyenne de 0,5 à 10, de préférence de 1 à 5 mm.

11. Mode de réalisation selon revendication 10, caractérisé en ce que l'on ajoute à la masse de revêtement des oligo-éléments importants pour la croissance des végétaux ou des produits phytosanitaires systémiques.

12. Application du procédé selon les revendications 1 à 9 à l'enrobage d'agents déshydratants solubles dans l'eau.